## Europäisches Patentamt

## European Patent Office

## Office européen des brevets

(19)

(11) Veröffentlichungsnummer: **0 024 469**
**A1**

(12) **EUROPÄISCHE PATENTANMELDUNG**

(21) Anmeldenummer: **80102195.7**

(22) Anmeldetag: **24.04.80**

(51) Int. Cl.³: **G 03 B 23/04**
**G 03 B 23/16**

(30) Priorität: **18.08.79 DE 2933515**

(43) Veröffentlichungstag der Anmeldung:
**11.03.81 Patentblatt 81/10**

(84) Benannte Vertragsstaaten:
**AT BE CH FR GB IT LI LU NL SE**

(71) Anmelder: **Rollei-Werke Franke & Heidecke GmbH + Co KG**
**Salzdahlumer Strasse 196**
**D-3300 Braunschweig(DE)**

(72) Erfinder: **Prochnow, Claus**
**Lange Strasse 38**
**D-3300 Braunschweig(DE)**

(74) Vertreter: **Pretzell, Hellmut, Dipl.-Ing.**
**Salzdahlumer Strasse 196**
**D-3300 Braunschweig(DE)**

(54) **Dia-Magazin.**

(57) Es wird ein Dia-Magazin mit zwei Magazinteilen (10, 11), einer Mehrzahl von im wesentlichen gleichmäßig auf die Magazinteile verteilten Dia-Fächern (12) und mit Kopplungselementen (14), die eine räumliche Anordnung der Magazinteile relativ zueinander in zwei definierten Gebrauchsstellungen ermöglichen, angegeben, welches als Projektionsmagazin und oder Lademagazin verwendet werden kann und das Einsortieren von Dias in richtiger Lage und Reihenfolge für die Projektion in einem Überblendprojektor mit zueinander gerichteten Projektionseinrichtungen wesentlich erleichtert. Hierzu liegen die beiden Magazinteile (10, 11) in der einem Gebrauchsstellung mit im wesentlichen fluchtenden Längsseiten (15-18) hintereinander und sind in der anderen Gebrauchsstellung spielgelsymmetrisch nebeneinander angeordnet, wobei in der ersten Gebrauchsstellung miteinander fluchtende Längsseiten (15, 17 bzw. 16, 18) einander zu bzw. abgekehrt sind.

Fig. 2

Rollei-Werke Franke & Heidecke
GmbH & Co KG
3300 Braunschweig

A 1168 EU
9. 8. 1979

## Dia-Magazin

Die Erfindung betrifft ein Dia-Magazin der im Oberbegriff des Anspruchs 1 definierten Gattung.

Ein bekanntes Dia-Magazin dieser Art ist als Projektionsmagazin für einen Dia-Projektor mit Überblendeinrichtung ausgestaltet. Solche Dia-Projektoren mit Überblendeinrichtung weisen zwei ortsfeste Bildbühnen auf, von denen jede einem eigenen Projektionsstrahlengang mit einem gesonderten oder gemeinsamen Objektiv zugeordnet ist. Jeder Strahlengang projiziert ein Bild eines in der betreffenden Bildbühne befindlichen Dias auf den gleichen Bildbereich eines Projektionsbildschirms. Während hierbei ein Dia in der einen Bildbühne auf dem Bildschirm erscheint, wird das zuvor projizierte Dia aus der anderen Bildbühne herausbewegt und durch das als nächstes vorzuführende Dia ersetzt. Dann wird, um von dem projizierten Bild auf dieses nächste Bild überzuwechseln, die Helligkeit des gerade auf dem Bildschirm gezeigten Bildes allmählich verringert, während gleichzeitig die Helligkeit des Bildes des nächsten Dias, das sich in der anderen Bildbühne befindet, allmählich vergrößert wird. Auf diese Weise wird das eine Bild allmählich ausgeblendet und das nächste Bild mehr oder weniger weich eingeblendet.

Da bei diesen Dia-Projektoren mit Überblendeinrichtung aufeinanderfolgende Dias abwechselnd in zwei getrennte Bildbühnen gebracht werden müssen, sind in bekannten Dia-Projektoren dieser Art zwei Magazine vorgesehen, von denen jedes nur Dias für die betreffende Bildbühne enthalten darf. Da hierbei die Dias in den beiden Magazinen in einer ununterbrochenen Reihe abwechselnd aufeinanderfolgend angeordnet sein müssen, gestaltet sich das Ordnen und Einsortieren der Dias sehr unbequem. Der Benutzer muß außerdem seine besondere Aufmerksamkeit darauf richten, daß beim Einsortieren die besondere, wechselnde Reihenfolge eingehalten wird, wenn die Dias von den beiden Bildbühnen in der richtigen Reihenfolge projiziert werden sollen.

Das bekannte Dia-Magazin der eingangs genannten Art läßt sich nunmehr in zwei Gebrauchsstellungen überführen. In der einen Gebrauchsstellung sind die beiden Magazinteile mit den Dia-Bühnen ineinandergeschoben und bilden ein einheitliches Gesamtmagazin. Hierbei liegen die einzelnen Dia-Fächer der beiden Magazinteile abwechselnd hintereinander, so daß also immer ein Dia-Fach des einen Magazinteils einem Dia-Fach des anderen Magazinteils benachbart ist. In dieser Gebrauchsstellung lassen sich nunmehr die Dias sehr einfach und problemlos einsortieren, da sie lediglich - wie bei Dia-Magazinen für normale Projektoren mit einem einzigen Projektionsstrahlengang - in der gewünschten Reihenfolge in aufeinanderfolgende Dia-Fächer eingesetzt zu werden brauchen. Nach dem Einsetzen der Dias wird das Dia-Magazin durch Auseinanderziehen der Magazinteile quer zu deren Längsachsen in die zweite Gebrauchsstellung überführt. In jedem Magazinteil liegen damit nur geradzahlige bzw. ungeradzahlige Dias der Dia-Folge hintereinander. Das Dia-Magazin wird in dieser Gebrauchsstellung in den Dia-Projektor eingeschoben. Jeder Bildbühne ist damit ein Magazinteil zugeordnet, so daß dieser jeweils immer nur das zweite Dia der Dia-Folge zugeführt wird. Bei der Projektion erscheinen dann die Dias in der einsortierten Reihenfolge auf dem Bildschirm.

Das vorstehend beschriebene bekannte Dia-Magazin eignet sich allerdings nur für einen Dia-Projektor, dessen beide Bildbühnen aus zwei getrennten, zueinander parallel geführten Magazinen versorgt werden. Die beiden Projektionseinrichtungen des Projektors mit Überblendeinrichtung sind hierbei parallel zueinander ausgerichtet.

Nun ist bereits auch ein Dia-Projektor bekannt, bei welchem die beiden Projektionseinrichtungen einander gegenüberliegend angeordnet sind, und zwischen den Projektionseinrichtungen sich ein schwenkbarer Ablenkspiegel befindet, der abwechselnd die in den Bildbühnen der beiden Projektionseinrichtungen befindlichen Dias auf den Bildschirm wirft. Ein solcher Überblendprojektor benötigt relativ wenig Bauraum und eröffnet vor allem die Möglichkeit, die beiden Bildbühnen der beiden Projektionseinrichtungen aus einem einzigen Dia-Magazin zu versorgen. Allerdings besteht dabei die Notwendigkeit, den Abstand der Dia-Bühnen an die Magazinlänge anzupassen und diesen etwa gleich der halben Magazinlänge zu machen. Damit kann gleichzeitig oder abwechselnd jeweils ein Dia aus der vorderen und der hinteren Magazinhälfte in die Bildbühnen überführt und wieder zurückgestellt werden. Der Transportweg des Magazins beträgt dadurch insgesamt nur eine halbe Magazinlänge.

Will man bei einem solchen Dia-Projektor Dias in einer gewünschten Reihenfolge projizieren, so ist das Ordnen und Einsortieren der Dias in das Dia-Magazin äußerst kompliziert. Zum einen müssen in der gewünschten Reihenfolge aufeinanderfolgende Dias abwechselnd in entsprechende Dia-Fächer in der vorderen und hinteren Magazinhälfte eingesetzt werden. Hat z.B. ein Dia-Magazin insgesamt fünfzig Dia-Fächer, so muß demnach das erste Dia in das 1. Dia-Fach, das zweite Dia in das 26. Dia-Fach, das dritte Dia in das 2. Dia-Fach, das vierte Dia in das 27. Dia-Fach usw. eingesetzt werden. Zum anderen ist zu berücksichtigen, daß die Projektionseinrichtungen gegeneinander gerichtet sind und die Dias immer so in die Bildbühnen eingeführt werden müssen, daß die blanke Dia-Seite zur Projektionslampe und die Schichtseite zum Objektiv hin gerichtet ist. Das bedeutet, daß die Dias in der vorderen und hinteren Magazinhälfte gegeneinander verdreht eingeordnet werden müssen, so daß die Schichtseiten der Dias in der vorderen und hinteren Magazinhälfte einander zugekehrt sind. Eine solche Beschickungsvorschrift des Magazins impliziert geradezu Fehler beim Einsortieren. Die Folge davon ist eine ständige Unterbrechung einer Dia-Vorführung zum Korrigieren falsch einsortierter Dias.

Der Erfindung liegt die Aufgabe zugrunde, ein Dia-Magazin der eingangs genannten Art zu schaffen, das für die Projektion mit einem vorstehend skizzierten Überblendprojektor das folge- und lagerichtige Einsortieren der Dias in das Dia-Magazin wesentlich vereinfacht und dadurch die Gefahr des falschen Einsortierens beträchtlich reduziert.

Diese Aufgabe ist bei einem Dia-Magazin der im Oberbegriff des Anspruchs 1 definierten Gattung erfindungsgemäß durch die Merkmale im Kennzeichnungsteil des Anspruchs 1 gelöst.

Bei dem erfindungsgemäßen Dia-Magazin können in der zweiten Gebrauchsstellung, in welcher die beiden Magazinteile parallel nebeneinander liegen, die Dias in einfacher Weise einsortiert werden. Das Dia-Magazin stellt der Einsortierende so vor sich hin, daß das am Magazinanfang liegende Dia-Fach von ihm weg weist. Nunmehr muß der Einsortierende die Dias immer in der gleichen Lage in die beiden Magazinteile einsetzen, und zwar mit auf ihn hin weisenderSchichtseite. Die folgerichtige Projektion einer Dia-Serie in der gewünschten Reihenfolge wird dadurch sichergestellt, daß die aufeinanderfolgenden Dias abwechselnd in das eine und das andere Magazinteil eingesetzt werden, wobei das eine Magazinteil von dem von dem Einsortierenden weggerichteten Magazinanfang aus und der andere Magazinteil in gegenlaufender Richtung von der zu dem Einsortierenden hinweisenden Stirnseite aus allmählich gefüllt wird. Werden die solchermaßen mit Dias gefüllten Magazinteile in die andere Gebrauchsstellung überführt, in welcher sie im wesentlichen fluchtend hintereinanderliegen, so befinden sich alle Dias in dem nunmehr projektionsbereiten Magazin in projektionsrichtiger Position.

Besonders vorteilhaft ist dabei die Ausführungsform der Erfindung gemäß Anspruch 8. Die auf den beiden Magazinteilen angebrachten Ziffernskalen erleichtern das Einsortieren der einzelnen Dias und machen eine Gebrauchsanleitung hierzu überflüssig.

Eine besonders vorteilhafte Ausführungsform der Erfindung ergibt sich aus Anspruch 2, insbesondere in Verbindung mit den Ansprüchen 3 und 4. Durch diese Maßnahmen läßt sich eine konstruktiv einfache und preiswerte Ausbildung der Kopplungselemente erreichen.

Eine weitere vorteilhafte Ausführungsform der Erfindung sieht Anspruch 5 vor. Durch diese Maßnahme erhält das Dia-Magazin in der Magazinmitte einen lichten Raum in der Größe einer Dia-Fach-Breite. Dies ermöglicht das Einsetzen und Herausnehmen des Dia-Magazins in den bzw. aus dem Überblendprojektor quer zur Magazinlängsachse, da hierdurch der eine Dia-Wechselschieber, der in Übereinstimmung mit der Anordnung der Bildbühnen einen Abstand von etwa einer halben Magazinlänge von dem anderen Dia-Wechselschieber aufweist, ungehindert in das Dia-Magazin eindringen kann.

Vorteilhaft ist dabei die Ausführungsform der Erfindung gemäß den Ansprüchen 6 und 7. Durch diese Maßnahmen wird in einfacher Weise die Distanz zwischen den beiden Magazinteilen in der ersten Gebrauchslage sichergestellt.

In besonders vorteilhafter Weise läßt sich das erfindungsgemäße Dia-Magazin als Lademagazin für Projektionsmagazine verwenden. Hierdurch ist es möglich, im Handel befindliche herkömmliche Magazine für Projektoren mit einer einzigen Projektionseinheit, sog. Stabmagazine, die auch unter dem Namen "Einheitsmagazine" bekannt geworden sind, ohne Änderungen auch für den eingangs beschriebenen Überblendprojektor mit gegeneinander gerichteten Projektionseinrichtungen zu verwenden. Das nunmehr als Lademagazin fungierende erfindungsgemäße Dia-Magazin wird in der vorstehend beschriebenen Weise mit Dias gefüllt, wobei lediglich nicht die Oberkante, sondern die Unterkante eines jeden Dias zum Magazingrund hinweist. Wie bereits erwähnt, liegen die beiden Magazinteile beim Einsortieren spiegelsymmetrisch nebeneinander. Die gefüllten Magazinteile werden dann umeinander geschwenkt, so daß sie fluchtend hintereinander liegen. Nunmehr wird das bekannte Projektionsmagazin mit der Oberseite auf das gefüllte Lademagazin aufgestülpt, wobei die Dias teilweise in die Dia-Fächer des Projektionsmagazins eindringen. Durch Schwenken der aufeinander gehaltenen Magazine um die Längsachse, und zwar um 180°, fallen die Dias aus dem Lademagazin in das Projektionsmagazin. Die Dias befinden sich nunmehr in der projektionsgerechten Position in dem Projektionsmagazin, das in den Projektor eingesetzt werden kann.

Gleichzeitig wird durch die erfindungsgemäße Ausgestaltung des Lademagazins das in der Mitte des Projektionsmagazins liegende Dia-Fach nicht mit einem Dia gefüllt, so daß beim Einsetzen des Projektionsmagazins in den Überblendprojektor quer zur Magazinlängsachse der zweite Dia-Wechselschieber ungehindert in das leere Dia-Fach eindringen kann.

Besonders vorteilhaft ist dabei die Ausführungsform der Erfindung gemäß Anspruch 10. Durch die erfindungsgemäßen Anschläge bzw. Winkelstege läßt sich das Projektionsmagazin lagegerecht auf das Lademagazin aufsetzen, wobei einander zugeordnete Dia-Fächer miteinander fluchten.

Besonders vorteilhaft ist dabei, wenn gemäß einer weiteren Ausführungsform der Erfindung der Anschlag, vorzugsweise ein Schenkel des Winkelsteges, an dem einen Magazinteil einen Abstand von dessen Stirnseite aufweist, welcher der Summe aus einer Dia-Fach-Breite und der Dicke eines die Dia-Fächer trennenden Steges entspricht. Durch diese erfindungsgemäße Maßnahme wird der Tatsache Rechnung getragen, daß die herkömmlichen, bekannten Magazine immer eine geradzahlige Anzahl von Dia-Fächern enthalten. Beim Laden des Projektionsmagazins, das paßgenau zwischen die Anschläge bzw. Winkelstege eingesetzt wird, wird damit sichergestellt, daß das letzte Dia-Fach des Projektionsmagazins nicht mit einem Dia gefüllt wird. Damit ist sichergestellt, daß nach Projektion sämtlicher in dem Projektionsmagazin befindlichen Dias der zweite Wechselschieber des Überblendprojektors ungehindert in das letzte, leere Dia-Fach des Projektionsmagazins eindringen kann, während der andere, erste Dia-Wechselschieber des Überblendprojektors in das mittlere, ebenfalls leere Dia-Fach des Projektionsmagazins eintritt. In dieser Stellung sind alle Dias nach erfolgter Projektion wieder in das Projektionsmagazin in der richtigen Reihenfolge einsortiert und das Projektionsmagazin kann dem Projektor - wiederum quer zur Magazinlängsachse - entnommen werden.

In einer weiteren vorteilhaften Ausführungsform der Erfindung ist vorgesehen, daß die Anschläge, vorzugsweise die einen Schenkel der Winkelstege, an den in der zweiten Gebrauchsstellung einander zugekehrten Längsseiten der Magazinteile über diese überstehen und daß die rechtwinklig zu diesen Längsseiten gesehenen Abstände der Schwenkachse von diesen jeweils dem Überstandsmaß der Anschläge, vorzugsweise der einen Schenkel der Winkelstege, entsprechen. Durch diese konstruktiven Maßnahmen läßt sich eine exakte Anlage der beiden Magazinteile aneinander in der zweiten Gebrauchsstellung erreichen.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen. Hierdurch haben jedoch alle diese Anspruchsmerkmale als an dieser Stelle ausdrücklich und erfindungswesentlich offenbart zu gelten.

Die Erfindung ist anhand eines in der Zeichnung dargestellten Ausführungsbeispieles im folgenden näher beschrieben. Es zeigen:

Fig. 1      eine Draufsicht auf ein Dia-Magazin,

Fig. 2      eine Draufsicht auf das gegenüber Fig. 1 in eine andere Gebrauchsstellung geschwenkte Dia-Magazin.

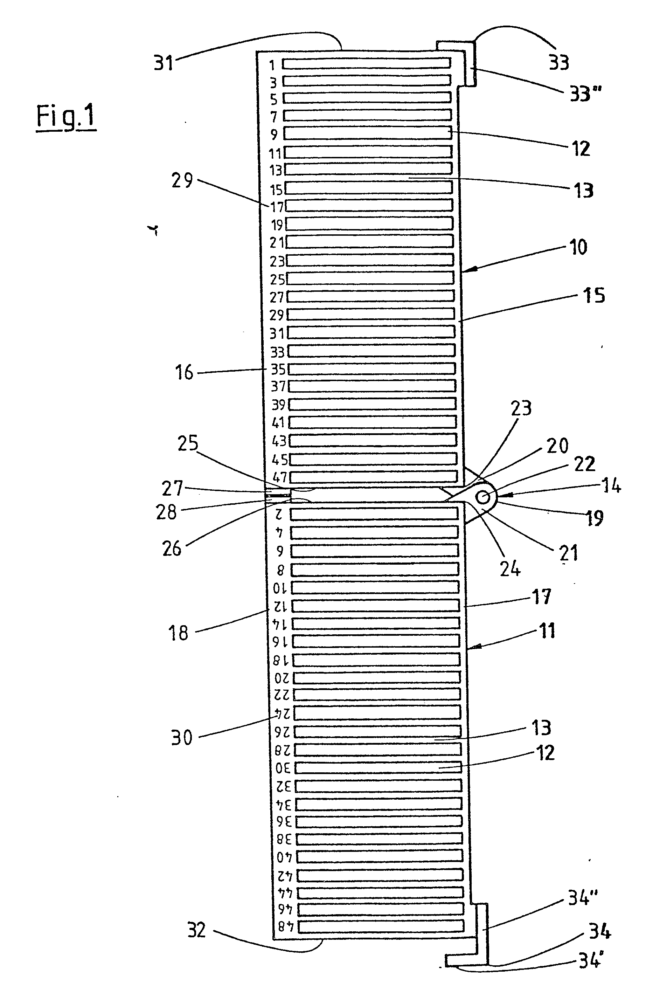

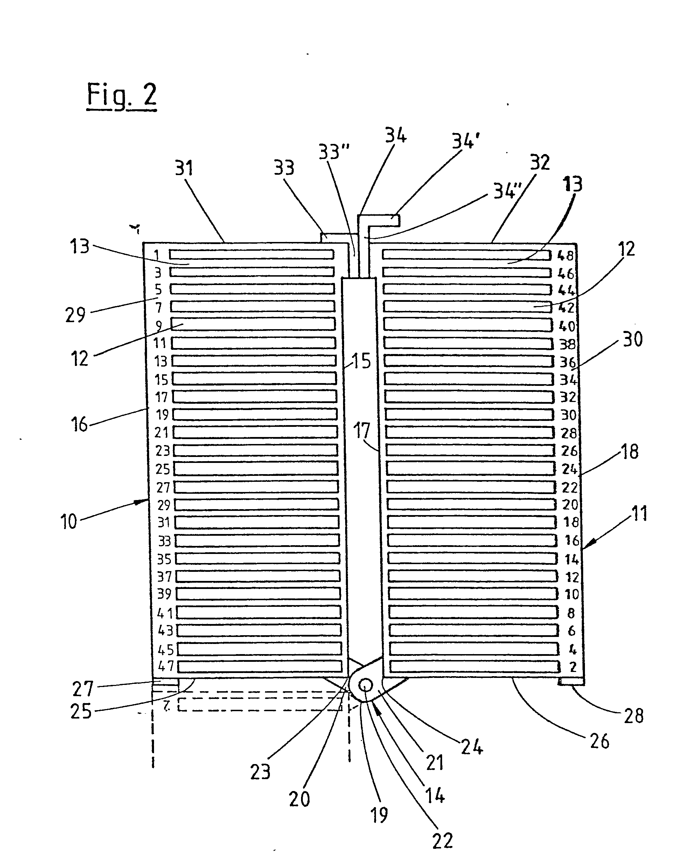

Das in Fig. 1 dargestellte Dia-Magazin weist zwei Magazinteile 10 und 11 und eine Mehrzahl von im wesentlichen gleichmäßig auf die Magazinteile verteilten Dia-Fächern 12 auf. Die Dia-Fächer 12 sind identisch ausgebildet und durch Wandstege 13 gleicher Stärke oder Dicke voneinander getrennt. Die Dia-Fächer 12 können jeweils ein Dia beliebiger Art, wie Glasdias, Papp-Slides und dgl., aufnehmen. Zwischen den beiden Magazinteilen 10 und 11 sind Kopplungselemente 14 vorgesehen, die derart ausgebildet sind, daß die Magazinteile 10, 11 in zwei definierte Gebrauchsstellungen mit unterschiedlicher räumlicher Anordnung zueinander gebracht werden können. In der ersten, in Fig. 1 gezeigten Gebrauchsstellung liegen die beiden Magazinteile 10, 11 hintereinander. Dabei fluchten die Längsseiten 15 und 16 des Magazinteils 10 mit den entsprechenden Längsseiten 17 und 18 des Magazinteils 11. In der in Fig. 2 dargestellten zweiten Gebrauchsstellung liegen die beiden Magazinteile 10, 11 spiegelsymmetrisch nebeneinander, wobei die in der ersten Gebrauchsstellung miteinander fluchtenden Längsseiten 15, 17 bzw. 16, 18 nunmehr einander zu- bzw. abgekehrt sind. Die beiden Magazinteile 10, 11 sind identisch ausgebildet und weisen die gleiche Anzahl von Dia-Fächern 12 auf.

Die Kopplungselemente 14 weisen in dem vorliegenden Ausführungsbeispiel ein Scharnier 19 auf, das mit jeweils einem Scharnierlappen 20 bzw. 21 an einem Magazinteil 10 bzw. 11 festgelegt ist. Die Schwenkachse 22 des Scharniers 19 ist zu den Längsseiten 15, 16, 17, 18 parallel und zu den Längsachsen der beiden Magazinteil 10, 11 quer ausgerichtet. Dabei ist die Schwenkachse 22 nahe den Seitenkanten 23 und 24 der Magazinteile 10 und 11 angeordnet. Die Seitenkante 23 des Magazinteils 10 wird von dessen Längsseite 15 und dessen Stirnseite 25 gebildet, während die Seitenkante 24 von der Längsseite 17 und der Stirnseite 26 des Magazinteils 11 gebildet wird. Die Stirnseiten 25, 26 der beiden Magazinteile 10, 11 sind
in der in Fig. 1 dargestellten ersten Gebrauchsstellung und
die Längsseiten 15 bzw. 16 in der in Fig. 2 dargestellten
zweiten Gebrauchsstellung einander zugekehrt.

Wie aus Fig. 1 zu erkennen ist, weisen die einander
zugekehrten Stirnseiten 25, 26 der Magazinteile 10,11 einen
Abstand voneinander auf, der einer Dia-Fach-Breite entspricht. Unter Dia-Fach-Breite wird hier der Abstand
eines Wandsteges 13 von dem nächsten verstanden. Dieser
Abstand wird mittels zweier Distanzstücke 27, 28 sichergestellt, die jeweils an einer Stirnseite 25 bzw. 26
der Magazinteile 10 bzw. 11 angeordnet sind
und in der in Fig. 1 dargestellten ersten Gebrauchsstellung
aneinander anliegen. Jedes Distanzstück 27, 28 hat eine
der halben Dia-Fach-Breite entsprechende Dicke. Um eine
einwandfreie fluchtende Ausrichtung mit parallel zueinander verlaufenden Dia-Fächern 12 der beiden Magazinteile
10, 11 sicherzustellen, weist die Schwenkachse 22 einen
in Längsrichtung der beiden Magazinteile 10, 11 gesehenen
Abstand von den beiden Stirnseiten 25, 26 auf, der einer
halben Dia-Fach-Breite entspricht.

Um das folgerichtige Einsortieren der Dias in die beiden
Magazinteile 10, 11 zu erleichtern, trägt jedes Magazinteil 10, 11 eine den Dia-Fächern 12 zugeordnete Ziffernskala 29 bzw. 30. In der auf dem Dia-Magazin 10 angeordneten Ziffernskala 29 finden sich nur ungeradzahlige Ziffern
in aufsteigender Reihenfolge. Die auf dem Magazinteil 11
angeordnete Ziffernskala 30 enthält nur geradzahlige
Ziffern, ebenfalls in aufsteigender Reihenfolge. Die
Reihenfolge der Ziffern in den beiden Ziffernskalen 29,
30 sind in der in Fig. 2 gezeigten zweiten Gebrauchsstellung auf den beiden Magazinteilen 10, 11 gegenläufig,
d.h. auf dem Magazinteil 10 befindet sich die höchste
Ziffer an der Stirnseite 25, während an dem Magazinteil 11 die kleinste Ziffer an der Stirnseite 26 angeordnet ist.
Die Ziffernskalen 29, 30 sind auf der Oberseite der Längsseiten 16 bzw. 18 der Magazinteile 10, 11 aufgebracht.

In dem vorstehend beschriebenen Aufbau kann das Dia-
Magazin unmittelbar als Projektionsmagazin verwendet
werden. Hierzu können beispielsweise - wie bei dem bekannten Einheitsmagazin - die Wände an den beiden Längsseiten 15, 17 der beiden Magazinteile 10, 11 bis auf
einen Steg reduziert sein, so daß die in den Dia-Fächern
12 befindlichen Dias - nach entsprechendem Anheben mittels
einer projektorseitigen Anheberampe - quer zur Längsachse
der beiden Magazinteile ausgeschoben bzw. eingeschoben
werden können. Zum Einsortieren der Dias werden die beiden
Magazinteile in die in Fig. 2 dargestellte räumliche Anordnung gemäß der zweiten Gebrauchsstellung gebracht. Der
Einsortierende stellt dabei das Magazin so vor sich hin,
daß die beiden Stirnseiten 25, 26 auf ihn hin weisen. Die
einzelnen Dias werden so in die Magazinteile 10, 11 eingesetzt, daß ihre Schichtseite zum Einsortierenden hin
weist. Um eine gewünschte Vorführungsreihenfolge der Dias
zu erhalten, werden die Dias in der gewünschten Reihenfolge abwechselnd in den Magazinteil 10 und 11 eingesteckt,
wobei der Magazinteil 10 vom Dia-Fach mit der Ziffer 1
und der Magazinteil 11 vom Dia-Fach mit der Nummer 2 aus
allmählich gefüllt wird. Sind sämtliche Dia-Fächer 12
belegt, so werden die beiden Magazinteile 10, 11 um die
Schwenkachse 22 geschwenkt und in die in Fig. 1 dargestellte Gebrauchsstellung überführt. In dieser Gebrauchsstellung kann nunmehr das Dia-Magazin in den Überblendprojektor eingesetzt werden. Das Einsetzen des Dia-Magazins erfolgt dabei quer zu dessen Längsachse, wobei der
eine Dia-Wechselschieber unmittelbar vor dem einen Ende
des Magazins zu liegen kommt und der andere Dia-Wechselschieber zwischen die beiden Stirnseiten 25 und 26 der
Magazinteile 10, 11 eindringt. Bei der Projektion der einzelnen Dias wird das Magazin schrittweise um ein Dia-Fach weitertransportiert, wobei jeweils der eine Dia-Wechselschieber aus dem Magazinteil 10 und der andere Dia-Wechselschieber aus dem Magazinteil 11 ein Dia entnimmt und der jeweiligen Bildbühne zuführt. Nach Projektion aller Dias hat sich das Dia-Magazin um eine halbe Magazinlänge, also um die Länge eines Magazinteils 10 oder 11 im Überblendprojektor weiterbewegt und der erste Dia-Wechselschieber liegt nunmehr zwischen den Stirnseiten 25 und 26 der beiden Magazinteile 10 und 11, während der andere Wechselschieber unmittelbar an dem anderen Ende des Magazins liegt.

Das vorstehend beschriebene Dia-Magazin kann in besonders vorteilhafter Weise als Lademagazin verwendet werden. Ein solches Lademagazin dient zum Einsortieren der Dias und zum schnellen Umfüllen der sortierten Dias in ein Projektionsmagazin. Als Lademagazin können die beiden Magazinteile 10, 11 beispielsweise kastenförmig mit geschlossenen Wänden an den Längsseiten 15, 16 bzw. 17, 18 ausgebildet sein. In diesem Fall sind die Magazinteile 10, 11 an ihren in der ersten Gebrauchsstellung gemäß Fig. 1 voneinander abgekehrten Enden 31, 32 mit Winkelstegen 33, 34 versehen. Diese Winkelstege stehen über die Oberseite der beiden Magazinteile 10, 11 vor und bilden Anschläge für ein Projektionsmagazin, das paßgenau zwischen die Winkelstege 33, 34 eingelegt werden kann. Dabei wird das Projektionsmagazin mit seiner Oberseite auf die Oberseite des Lademagazins gelegt. Die Winkelstege 33, 34 sorgen dabei für eine exakte Ausrichtung der einander zugeordneten Dia-Fächer im Projektionsmagazin und Lademagazin, so daß die in den Dia-Fächern 12 befindlichen Dias ungehindert mit ihren Oberseiten in die Dia-Fächer des Projektionsmagazins eindringen können.

Der eine Schenkel 34' des Winkelsteges 34 an dem Magazinteil 11 weist einen Abstand von dessen stirnseitigem Ende 32 auf, welcher der Summe aus einer Dia-Fach-Breite und der Stärke eines Wandsteges 19 entspricht. Durch diese Maßnahme wird der Tatsache Rechnung getragen, daß bekannte, handelsübliche Stabmagazine, sog. Einheitsmagazine, immer eine geradzahlige Anzahl von Dia-Fächern aufweisen. Wird ein solches bekanntes Projektionsmagazin mit dem erfindungsgemäßen Lademagazin gefüllt, so wird das Projektionsmagazin, wie erwähnt, paßgenau in die beiden Winkelstege 33, 34 eingelegt. Das hier beschriebene Beispiel eines Lademagazins ist zum Laden eines Stabmagazins mit insgesamt fünfzig Dia-Fächern vorgesehen. Wie aus den beiden Ziffernskalen 29 und 30 ersichtlich ist, kann das Lademagazin aber nur mit insgesamt 48 Dias gefüllt werden. Wird nunmehr auf das in vorstehend beschriebener Weise mit Dias gefüllte Lademagazin, das nach Einsortieren der Dias in die in Fig. 1 gezeigte erste Gebrauchsstellung geschwenkt worden ist, ein Projektionsmagazin mit fünfzig Dia-Fächern aufgesetzt, so paßt dieses Dia-Magazin formgenau zwischen die beiden Wandstege 33 und 34, wobei der Schenkel 34' an dem stirnseitigen Ende des Projektionsmagazins anliegt. Werden nunmehr die beiden aufeinandergesetzten Magazine um die Längsachse um 180° geschwenkt, so fallen die Dias aus dem Lademagazin in das Projektionsmagazin. Dabei bleiben die Dia-Fächer Nummer 25 und Nummer 50 des Projektionsmagazins leer. Damit ist sichergestellt, daß beim Einschieben des Projektionsmagazins quer zu dessen Längsachse in den Überblendprojektor der eine Dia-Wechselschieber in das Dia-Fach Nummer 25 ungehindert eindringen kann und der gleiche Dia-Wechselschieber nach Projektion aller im Projektionsmagazin befindlichen Dias in das Dia-Fach Nummer 50 ungehindert eindringen kann.

Aus fertigungstechnischen Gründen stehen die Schenkel 33''
und 34'' der Winkelstege 33 und 34 an den Längsseiten 15
und 17 der beiden Magazinteile 10 und 11 über. Um eine
exakte Anlage der beiden Magazinteile 10, 11 in der in
Fig. 2 dargestellten zweiten Gebrauchsstellung zu erzielen, ist die Schwenkachse 22 außerhalb des Bereichs der
beiden Magazinteile 10, 11 angeordnet, wobei die Abstände
der Schwenkachse von den Längsseiten 15, 17, rechtwinklig
zu diesen gesehen, dem Überstandsmaß der Schenkel 33'',
34'' der Winkelstege 33, 34 entsprechen.

**0024469**

Rollei-Werke Franke & Heidecke           9. 8. 1979
GmbH  &  CO KG
3300 Braunschweig

Patentansprüche

1. Dia-Magazin mit zwei Magazinteilen, einer Mehrzahl von im wesentlichen gleichmäßig auf die Magazinteile verteilten, jeweils ein Dia aufnehmenden Dia-Fächern und mit Kopplungselementen zwischen den Magazinteilen, die derart ausgebildet sind, daß die Magazinteile in zwei definierte Gebrauchsstellungen unterschiedlicher räumlicher Anordnung zueinander gebracht werden können, d a d u r c h   g e k e n n z e i c h n e t , daß die beiden Magazinteile (10, 11) in der einen, ersten Gebrauchsstellung (Fig. 1) mit im wesentlichen fluchtenden Längsseiten (15 - 18) und in der anderen, zweiten Gebrauchsstellung (Fig. 2) spiegelsymmetrisch nebeneinander angeordnet sind, wobei in der ersten Gebrauchsstellung miteinander fluchtende Längsseiten (15, 17 bzw. 16, 18) einander zu- bzw. abgekehrt sind.

2. Magazin nach Anspruch 1, d a d u r c h   g e k e n n - z e i c h n e t , daß die Kopplungselemente (14) eine zu den Längsseiten (15 - 18) parallel und zu den Längsachsen der Magazinteile (10, 11) quer ausgerichtete Schwenkachse (22) aufweisen, um welche die Magazinteile (10, 11) relativ zueinander geschwenkt werden können.

3. Magazin nach Anspruch 2, d a d u r c h  g e k e n n -
z e i c h n e t , daß die Schwenkachse (22) an oder
nahe den Seitenkanten (23, 24) der Magazinteile (10,
11) angeordnet ist, die von den in den beiden Gebrauchsstellungen (Fig. 1, Fig. 2) jeweils einander
zugekehrte Stirn- und Längsseiten (25, 26, 15, 17)
der Magazinteile (10, 11) gebildet werden.

4. Magazin nach Anspruch 2 oder 3, d a d u r c h
g e k e n n z e i c h n e t , daß die Kopplungselemente
(14) ein Scharnier (19) aufweisen, das mit jeweils
einem Scharnierlappen (20, 21) an einem Magazinteil
(10, 11) festgelegt ist.

5. Magazin nach einem der Ansprüche 1 - 4, d a d u r c h
g e k e n n z e i c h n e t , daß in der ersten Gebrauchsstellung (Fig. 1) die einander zugekehrten
Stirnseiten (25, 26) der beiden Magazinteile (10, 11)
einen einer Dia-Fach-Breite entsprechenden Abstand
voneinander aufweisen.

6. Magazin nach einem der Ansprüche 3 - 5, d a d u r c h
g e k e n n z e i c h n e t , daß mindestens ein Magazinteil (10, 11) auf seiner Stirnseite (25, 26) ein
Distanzstück (27, 28) trägt und daß die Schwenkachse
(22) mit einem der Größe des Distanzstücks (27, 28)
entsprechenden Abstand von der Seitenkante (23, 24)
des das Distanzstück (27, 28) tragenden Magazinteils
(10, 11) in Längsrichtung des Magazinteils (10, 11) versetzt
angeordnet ist.

7. Magazin nach Anspruch 6, d a d u r c h  g e k e n n -
z e i c h n e t , daß jedes Magazinteil (10, 11) ein
der halben Dia-Fach-Breite entsprechendes Distanzstück
(27, 28) aufweist und daß in der ersten Gebrauchsstellung (Fig. 1) die Distanzstücke (27, 28) aneinanderliegen.

8. Magazin nach einem der Ansprüche 1 - 7, d a d u r c h g e k e n n z e i c h n e t , daß jedes Magazinteil (10, 11) eine den Dia-Fächern (12) zugeordnete Ziffernskala (29, 30) trägt und daß in der einen Ziffernskala (29) die ungeradzahligen und in der anderen Ziffernskala (30) die geradzahligen Ziffern in aufsteigender Reihenfolge enthalten sind, deren Richtung auf den Magazinteilen (10, 11) in der zweiten Gebrauchsstellung (Fig. 2) gegenläufig ist.

9. Magazin nach einem der Ansprüche 1 - 8, g e k e n n - z e i c h n e t d u r c h die Verwendung als Lademagazin.

10. Magazin nach Anspruch 9, d a d u r c h g e k e n n - z e i c h n e t , daß die Magazinteile (10, 11) an ihren in der ersten Gebrauchsstellung (Fig. 1) voneinander abgekehrten Enden (31, 32) Winkelstege (33, 34) aufweisen, die Anschläge für das paßgenaue Einlegen eines Projektionsmagazins bilden.

11. Magazin nach Anspruch 10, d a d u r c h g e k e n n - z e i c h n e t , daß ein Schenkel (34') des Winkelsteges (34) an dem einen Magazinteil (11) einen Abstand von dessen Ende (31) aufweist, welcher der Summe aus Dia-Fach-Breite und der Wandstärke eines die Dia-Fächer (12) trennenden Wandsteges (13) entspricht.

12. Magazin nach Anspruch 10 oder 11, d a d u r c h g e k e n n z e i c h n e t , daß die einen Schenkel (33'', 34'') der Winkelstege (33, 34) an den in der zweiten Gebrauchsstellung (Fig. 2) einander zugekehrten Längsseiten (15, 17) der Magazinteile (10, 11) über diese überstehen und daß die rechtwinklig zu diesen Längsseiten (15, 17) gesehenen Abstände der Schwenkachse (22) von diesen jeweils dem Überstandsmaß der Schenkel (33'', 34'') der Winkelstege (33,
34) entsprechen.

Fig.1

## Fig. 2

0024469

Europäisches
Patentamt

**EUROPÄISCHER RECHERCHENBERICHT**

Nummer der Anmeldung

EP 80 10 2195.7

| Kategorie | Kennzeichnung des Dokuments mit Angabe, soweit erforderlich, der maßgeblichen Teile | betrifft Anspruch |
|---|---|---|
| | US - A - 3 718 392 (EASTMAN KODAK)<br><br>* gesamtes Dokument * | 1 |
| A | DE - A1 - 2 636 628 (LEITZ) | |

**EINSCHLÄGIGE DOKUMENTE**

**KLASSIFIKATION DER ANMELDUNG (Int.Cl.3)**

G 03 B 23/04
G 03 B 23/16

**RECHERCHIERTE SACHGEBIETE (Int. Cl.3)**

G 03 B 21/00
G 03 B 23/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 04-11-1980 | HOPPE |

EPA form 1503.1   06.78